# FASCICULE DE BREVET EUROPEEN

(11) **EP 3 649 694 B1**
(45) Date de publication et mention de la délivrance du brevet: **16.06.2021**
(21) Numéro de dépôt: 18733291.1
(22) Date de dépôt: 28.06.2018
(51) Int. Cl.: H01M 10/04, H01M 10/0583

(54) **PROCEDES DE REALISATION D'UN FAISCEAU ELECTROCHIMIQUE D'UN ACCUMULATEUR METAL-ION AU MOYEN D'UNE MEMBRANE A ELECTROLYTE POLYMERE GELIFIE, ACCUMULATEURS ASSOCIES**
VERFAHREN ZUR HERSTELLUNG EINES ELEKTROCHEMISCHEN BÜNDELS EINER METALL-IONENBATTERIE MITTELS EINER GELPOLYMERELEKTROLYTMEMBRAN UND ZUGEHÖRIGE BATTERIEN
METHODS FOR PRODUCING AN ELECTROCHEMICAL BUNDLE OF A METAL-ION BATTERY BY MEANS OF A GEL POLYMER ELECTROLYTE MEMBRANE, AND ASSOCIATED BATTERIES

(30) Priorité: 04.07.2017 FR 1756283
(43) Date de publication de la demande: 13.05.2020
(73) Titulaire: Commissariat à l'Énergie Atomique et aux Énergies Alternatives, 75015 Paris (FR); Solvay Specialty Polymers France, 75009 Paris (FR)
(72) Inventeur: CLAUDE, Guillaume, 38140 Saint-Martin-d'Uriage (FR); REYNIER, Yvan, 38120 Saint-Egreve (FR)
(74) Mandataire: Nony
(86) Numéro de dépôt international: PCT/EP2018/067455
(87) Numéro de publication internationale: WO 2019/007812

(56) Documents cités:
- EP-A1- 2 731 186
- US-A1- 2002 160 258
- US-A1- 2015 357 671
- US-A1- 2016 028 064
- US-A1- 2016 293 994

## Description

### Domaine technique

La présente invention concerne le domaine des générateurs électrochimiques métal-ion, qui fonctionnent selon le principe d'insertion ou de désinsertion, ou autrement dit intercalation- désintercalation, d'ions métalliques dans au moins une électrode.

Elle concerne plus particulièrement de nouvelles manières de réaliser un accumulateur électrochimique métal-ion à partir d'une membrane à électrolyte polymère déjà à l'état gélifié.

La membrane à électrolyte polymère gélifié selon l'invention est mise en œuvre en lieu et place d'un séparateur connu lors de l'assemblage des différents constituants.

La présente invention vise à améliorer les procédés d'assemblage des accumulateurs métal-ion, en particulier en réduisant le nombre d'étapes nécessaires à la fin.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Art antérieur

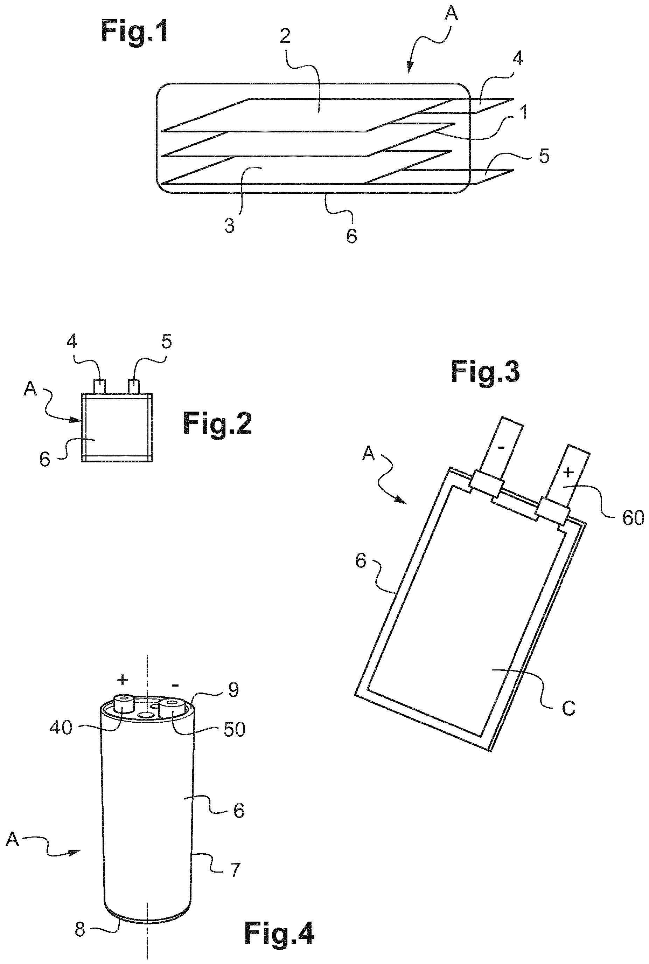

Telle qu'illustrée schématiquement en figures 1 et 2, une batterie ou accumulateur lithium-ion comporte usuellement au moins une cellule électrochimique C constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de type oxyde de nickel cobalt aluminium LiNiₓCo_{y}Al_{z}O₂ avec x+y+z = 1, tel que LiNi_{0.8}Co_{0.15}Al_{0.05}O₂.

L'électrode négative ou anode est très souvent constituée de carbone, graphite ou en Li₄Ti₅O₁₂ (matériau titanate), éventuellement également à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité se détériore fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

L'avantage principal des emballages rigides est ainsi leur étanchéité élevée et maintenue au cours du temps du fait que la fermeture des boitiers est réalisée par soudure, en générale par soudure au laser.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Les cellules cylindriques sont d'ailleurs nécessairement intégrées dans un boîtier rigide, car il serait très difficile de préformer des emballages souples avec un design cylindrique souhaité.

Un des types de boitier rigide de forme cylindrique, usuellement fabriqué pour un accumulateur Li-ion de forte capacité et à durée de vie supérieure à 10 ans, est illustré en figure 4.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

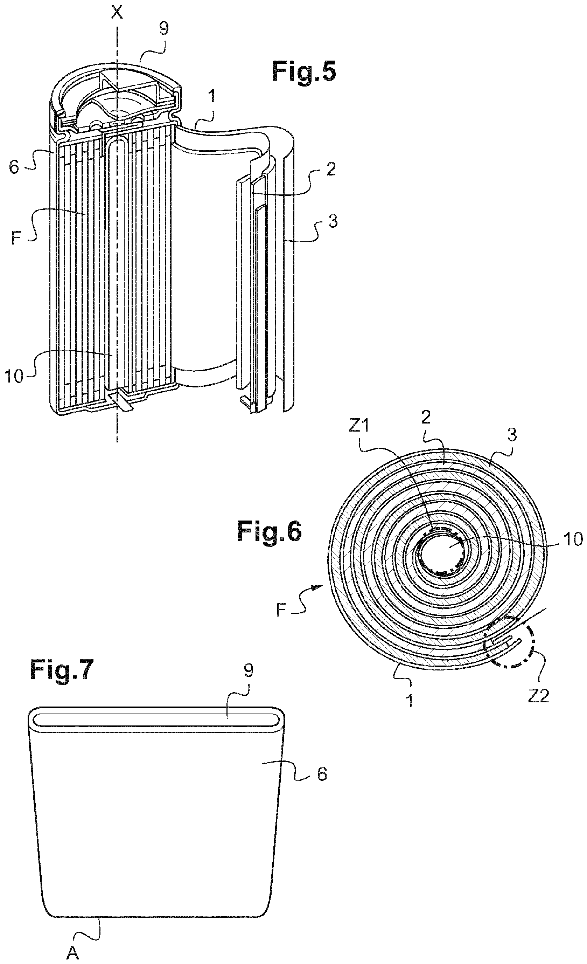

On a représenté en figure 5 une vue en coupe longitudinale d'un tel boitier 6 de géométrie axisymétrique autour de l'axe central 10 et logeant un faisceau électrochimique F de forme allongée et comportant une seule cellule électrochimique constituée d'une anode 3 et d'une cathode 4 de part et d'autre d'un séparateur 1 adapté pour être imprégné de l'électrolyte. La figure 5 montre le faisceau F obtenu, usuellement par bobinage autour d'un axe d'enroulement central 10 à l'intérieur du boitier cylindrique 6.

La figure 6 montre en vue de dessus un faisceau électrochimique déjà formé par bobinage cylindrique, avant qu'il soit logé dans un boitier cylindrique. Comme visible sur cette figure 6, le diamètre du faisceau dépend principalement de la longueur des composants de la cellule, du diamètre de l'axe d'enroulement et des épaisseurs des électrodes. On distingue clairement sur cette figure 6, la zone Z1 de début d'enroulement autour de l'axe 10 et la zone Z2 de fin d'enroulement de la cellule.

Des formes prismatiques de boitiers sont également largement répandues. Une telle forme de boitier 6 avec son couvercle 9 est représentée schématiquement en figure 7.

De tels boitiers prismatiques rigides peuvent loger soit un faisceau obtenu par bobinage d'une seule cellule soit un faisceau de forme générale prismatique obtenu par empilement de cellules électrochimiques rectangulaires. Les boitiers prismatiques ont pour principaux avantages :
- de permettre une dissipation de chaleur sur les faces de la cellule ou des cellules empilées qui sont de grande surface unitaire, et donc d'augmenter la taille des électrodes et par-là la capacité des cellules ;
- de pouvoir s'intégrer physiquement, facilement dans un pack batterie en minimisant le volume mort restant, grâce à leurs faces planes.

Ainsi, parmi les designs d'accumulateurs Li-ion, la géométrie prismatique avec un faisceau obtenu par bobinage s'avère très intéressante pour les applications de hautes densités d'énergie, grâce à sa faculté à dissiper aisément la chaleur produite lors du fonctionnement.

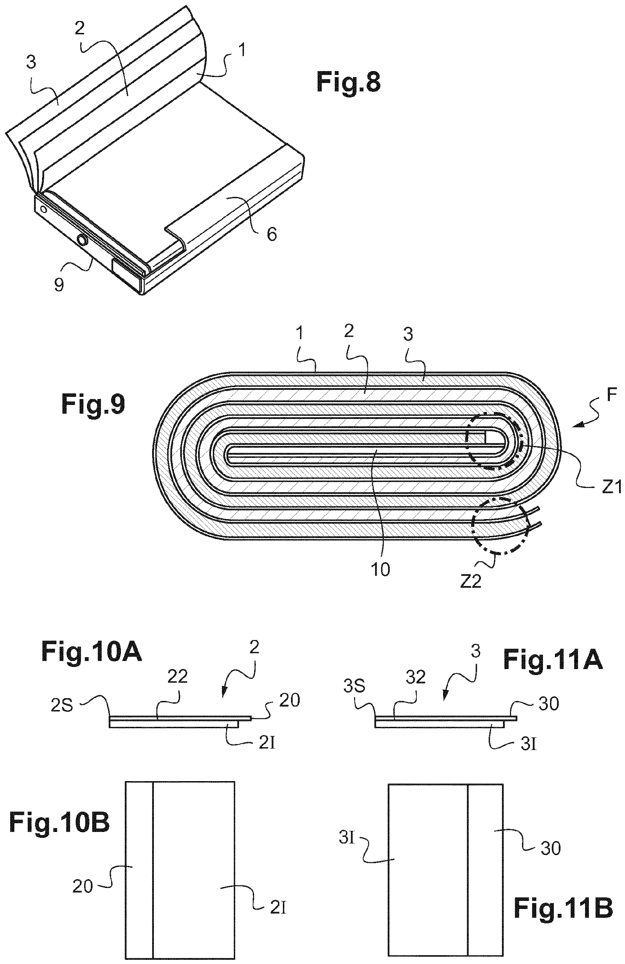

On a représenté en figure 8 un tel boitier 6 de géométrie prismatique avec un faisceau électrochimique F de forme allongée et comportant une seule cellule électrochimique constituée d'une anode 3 et d'une cathode 4 de part et d'autre d'un séparateur 1 adapté pour être imprégné de l'électrolyte.

La figure 9 montre en vue de dessus un faisceau électrochimique déjà formé par bobinage prismatique autour d'un noyau parallélépipédique 10, avant qu'il soit logé logement dans un boitier prismatique. Comme visible sur cette figure 9, l'épaisseur du faisceau dépend principalement de la longueur des composants de la cellule, de l'épaisseur du noyau d'enroulement et des épaisseurs des électrodes. On distingue clairement sur cette figure 9, les deux zones Z1 de début d'enroulement autour du noyau 10 et la zone Z2 de fin d'enroulement de la cellule.

On a représenté, respectivement en figures 10A et 10B et en figures 11A et 11B, une électrode positive ou cathode 2 et une électrode négative ou anode 3 à partir desquelles un faisceau électrochimique actuel est réalisé par bobinage avec un séparateur 4 intercalé entre cathode 2 et anode 3. La cathode 2 est constituée d'un substrat 2S formé d'un feuillard métallique qui supporte dans sa portion centrale 22, une couche continue de matériau actif d'insertion au lithium 21, tandis que sa bande latérale (rive) 20 est dépourvue de matériau actif d'insertion. De même, l'anode 3 est constituée d'un substrat 2S formé d'un feuillard métallique qui supporte dans sa portion centrale 32, une couche continue de matériau actif d'insertion au lithium 3I, et sa rive 30 est dépourvue de matériau actif d'insertion. Chaque feuillard métallique 2S, 3S est réalisé en un seul tenant, c'est-à-dire caractéristiques géométriques et métallurgiques sur toute sa surface.

Par « bande non revêtue » ou « rive », on entend ici et dans le cadre de l'invention, une portion latérale d'une feuille métallique, aussi appelée feuillard, formant un collecteur de courant, qui n'est pas recouverte d'un matériau d'insertion aux ions métal, tel que le lithium dans le cas d'un accumulateur Li-ion.

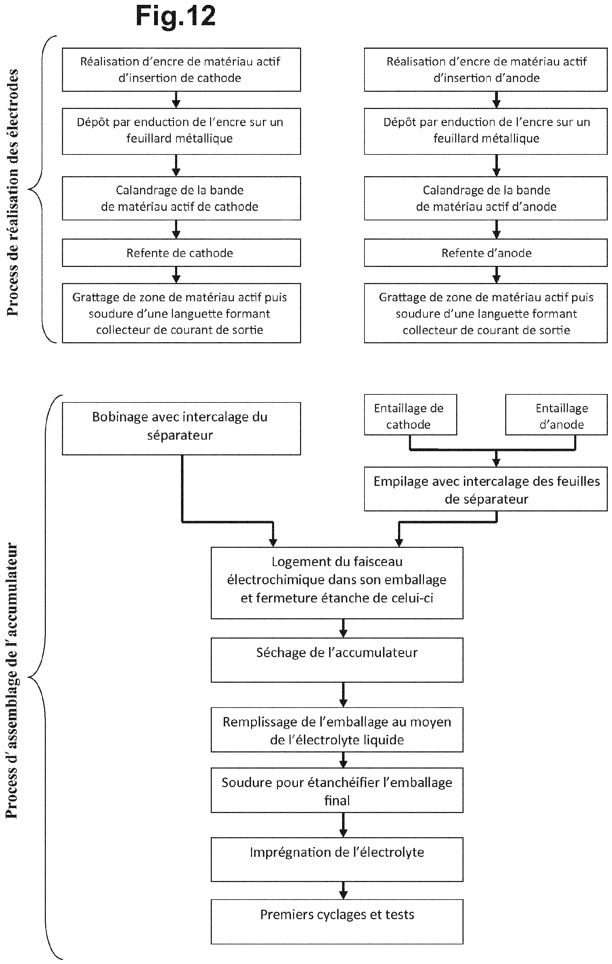

Le synoptique de la figure 12 indique l'ensemble à la fois des étapes du procédé de réalisation industrielle des électrodes pour accumulateurs Li-ion et des étapes du procédé d'assemblage de tels accumulateurs, telles qu'elles existent actuellement.

Ainsi, en ce qui concerne la réalisation des électrodes, on réalise tout d'abord pour chacune d'entre elles une encre par mélange initial d'une poudre de matériau actif d'insertion, différente pour une électrode négative et une électrode positive, avec un solvant. Des agents conducteurs et un liant sont ensuite ajoutés à ce mélange initial. Le mélange obtenu prend la consistance d'une encre du matériau d'insertion actif.

Les électrodes, telle que les électrodes 2, 3 sont obtenues ensuite selon un procédé en continu par une technique d'enduction de l'encre sur le feuillard métallique afin de constituer la couche continue active. Ces techniques d'enduction sont connues sous les termes anglo-saxons « slot die » ou « roll to roll transfert ». Après passage dans un four pour faire évaporer le solvant, on obtient un rouleau d'électrode sèche qui subit alors une compression par calandrage afin de diminuer le taux de porosité dans la couche de matériau actif, typiquement de 70 à une gamme de 0 à 40%.

Lorsque l'encre a enduit le feuillard métallique, les deux portions latérales de celui-ci restent nues, c'est-à-dire sans dépôt de matière active. Après le calandrage, on effectue une refente de l'électrode dans le sens de longueur afin que seule une bande latérale, comme la bande 20 ou 30, permette de réaliser un collecteur de courant. L'électrode refendue est alors enroulée sous la forme d'une bobine.

L'assemblage à partir des bobines, consistant à intercaler un séparateur entre une anode et une cathode, peut se faire selon deux techniques différentes : soit par bobinage, soit par empilage.

Comme cela ressort déjà des explications données ci-avant sur un accumulateur de géométrique cylindrique ou prismatique, le bobinage aussi appelé spiralage, consiste à enrouler autour d'un noyau, une électrode positive continue, un premier séparateur, une électrode négative et un second séparateur. Les contacts électriques sont repris généralement par au moins deux languettes qui sont soudées sur le collecteur de sortie positif et sur le collecteur de sortie négatif.

L'empilage consiste, quant à lui, à couper des feuilles de cathodes et d'anodes comme pour former les éléments 2, 3 puis à intercaler entre elles un séparateur.

La méthode d'empilage la plus connue et utilisée industriellement est la méthode dite de pliage en Z (« Z-folding » en anglais). Ainsi, un seul séparateur est plié sous la forme d'un accordéon et des feuilles d'anode et d'électrode sont intercalées alternativement dans l'accordéon.

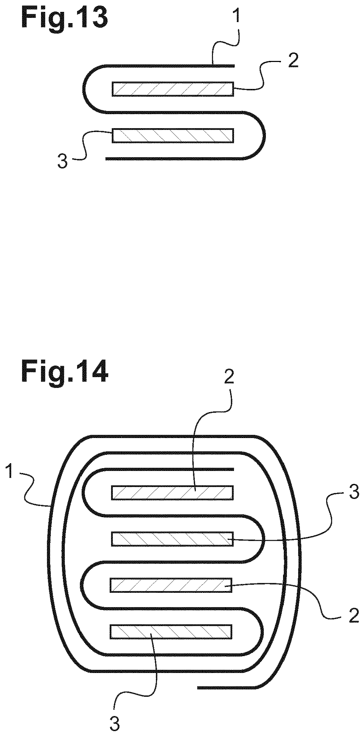

On a représenté en figure 13, en vue de coupe, le résultat d'un pliage en Z par mise en place alterné d'une feuille d'anode 3, d'un séparateur 1 étiré et enroulé autour de l'anode puis d'une feuille de cathode 2 et enroulement du séparateur autour de cette feuille de cathode. Cette opération est répétée autant de fois que l'on souhaite avoir d'anodes 3 et de cathodes 2 empilées. A la fin, le séparateur 1 est maintenu en pression sur l'empilement formé, puis coupé, l'empilement étant finalement mis en rotation pour permettre un enroulement complet du séparateur 1 tout autour de l'accumulateur formé, comme cela est montré en figure 14.

Une fois, le faisceau électrochimique réalisé par bobinage ou par empilage selon la technique de pliage en Z, il est logé dans un emballage souple ou un boitier rigide. Après une période de séchage de l'accumulateur au sein de l'emballage, un électrolyte liquide est ajouté à l'intérieur du boitier ou de l'emballage souple puis ce dernier est fermé par soudure pour qu'il devienne complètement étanche. Les premiers cyclages et tests sont alors effectués.

Des travaux récents ont été réalisés sur des accumulateurs ou batteries dites Li-polymère.

À la différence d'une batterie Li-ion (lithium-ion) conventionnelle, telles que fabriquée comme décrit précédemment avec l'utilisation d'un électrolyte liquide (milieu conducteur ou porteur de charge), un accumulateur Li-polymère emploie un électrolyte polymère. Il s'agit d'une membrane séparatrice imbibée, dite électrolyte polymère gélifié (en anglais « gelified polymer electrolyte » d'acronyme GPE), qui facilite l'échange d'ions associé à des électrodes dont les porosités sont aussi comblées d'électrolyte gélifié.

Les batteries Li-polymère suscitent un intérêt grandissant comme alternative aux batteries Li-ion à électrolyte liquide. Toutefois, elles présentent actuellement un certain nombre de limites qui les rend difficiles à exploiter industriellement.

En particulier, les procédés actuels de fabrication des faisceaux électrochimiques des accumulateurs Li-ion, tel qu'explicités ci-avant, ne peuvent être appliqués à la réalisation à partir d'une membrane à électrolyte polymère gélifié.

En effet, une telle membrane est mécaniquement très fragile et collante, ce qui rend le procédé d'empilage, notamment par pliage en Z, difficilement réalisable avec la membrane. De plus, comme déjà évoqué, pour assurer un bon maintien de l'empilement dans ce procédé, il est essentiel d'assurer une certaine tension dans le séparateur. Or, la tension minimale à laquelle un séparateur doit être tendu, est bien trop élevée pour l'appliquer sur une membrane à électrolyte polymère gélifié.

Dans le cas du procédé par bobinage, une membrane à électrolyte polymère gélifié étant intrinsèquement collante, il n'est pas envisageable de l'utiliser comme le séparateur car le caractère adhérent de la membrane induirait des défauts d'alignement.

En outre, le bobinage est industriellement possible car on ne peut maitriser les tensions des différentes bandes (cathode, anode et séparateur). Ici encore, il n'est pas possible d'appliquer une tension suffisante sur la membrane sans déformation de celle-ci du fait de sa fragilité. Le procédé de bobinage tel qu'il existe actuellement pour un accumulateur Li-ion est donc à ce jour impossible pour réaliser un accumulateur avec une membrane à électrolyte polymère gélifié.

La demande de brevet EP2731186A1 divulgue où un séparateur pour accumulateurs Li-ion, à base d'un substrat en polyoléfine poreux, qui est rempli d'une solution liquide d'électrolyte.

Il existe donc un besoin de proposer une nouvelle solution de réalisation des faisceaux électrochimiques d'accumulateurs au lithium, et plus généralement des accumulateurs métal-ion, qui mettent en œuvre une membrane à électrolyte polymère gélifié.

Le but de l'invention est de répondre au moins en partie à ce besoin.

### Exposé de l'invention

Pour ce faire, l'invention concerne, sous l'un de ses aspects, et selon une première alternative, un procédé de réalisation d'un faisceau électrochimique (F) d'un accumulateur (A) métal-ion tel qu'un accumulateur Li-ion, comprenant les étapes suivantes :
a1/ réalisation d'une électrode de polarité donnée et dont les porosités sont comblées par un électrolyte gélifié, comprenant un substrat formé d'un feuillard métallique comprenant une bande latérale, dite rive, dépourvue de matériau actif d'insertion, et une portion centrale supportant, sur au moins une de ses faces principales, un motif de matériau actif d'insertion d'ion métal de la polarité donnée;
a2/ réalisation d'une pluralité d'électrodes d'une polarité opposée à celle donnée et dont les porosités sont comblées par l'électrolyte gélifié, comprenant chacune un substrat formé d'un feuillard métallique comprenant une bande latérale, dite rive, dépourvue de matériau actif d'insertion, et une portion centrale supportant, sur au moins une de ses faces principales, un motif de matériau actif d'insertion d'ion métal de la polarité opposée;
b1/ réalisation d'une première membrane d'électrolyte sous la forme d'au moins un polymère gélifié, les dimensions surfaciques de la première membrane étant sensiblement supérieures à celle du motif de l'électrode de la polarité donnée ;
b2/ réalisation d'une pluralité de deuxièmes membranes d'électrolyte sous la forme d'au moins un polymère gélifié, les dimensions surfaciques de chaque deuxième membrane étant sensiblement supérieures à celles des motifs d'électrodes de la polarité opposée;
c1/ dépôt de la première membrane d'électrolyte gélifiée sur une des faces principales de l'électrode de polarité donnée de sorte à former un support, le dépôt étant tel que la première membrane déborde du motif de l'électrode de polarité donnée ;
c2/ dépôt de chaque deuxième membrane d'électrolyte gélifiée sur une faces principales des électrodes de polarité opposée de sorte à former un sous-ensemble, le dépôt étant tel que la deuxième membrane déborde du motif de l'électrode de polarité opposée ;
d/ mise à plat du support constitué de l'électrode de polarité donnée sur laquelle est collée la première membrane;
e/ collage d'une des faces principales d'une électrode de polarité opposée sur la première membrane dénuée de l'électrode de polarité donnée, le collage étant réalisé au niveau d'un des bords latéraux du support;
f/ bobinage sur lui-même du support de sorte à venir coller également l'autre des faces principales de l'électrode de polarité donnée sur la première membrane ;
g/ collage de l'électrode d'un sous-ensemble sur la première membrane, le collage étant réalisé à distance de la portion du support bobinée selon l'étape f/;
h/ bobinage sur lui-même du support de sorte à venir coller l'électrode du support sur la deuxième membrane du sous-ensemble tout en superposant les deux électrodes de polarité opposée ;
i/ réitération des étapes g/ et h/ avec tous les sous-ensembles de sorte à obtenir le faisceau bobiné.

Selon un mode de réalisation avantageux, l'électrode de polarité donnée formant le support avec la première membrane est une anode.

Selon une variante avantageuse, l'étape c1/ est réalisée par enduction d'un électrolyte polymère gélifié sur la face principale d'électrode de polarité donnée. Selon cette variante, un film en plastique non adhésif peut être appliqué contre la première membrane, le support étant alors enroulé sur lui-même avant l'étape d/, le film plastique étant décollé après l'étape d/ et avant l'étape e/.

Selon une autre variante avantageuse, l'étape c2/ est réalisée par application, sur chacune des électrodes de polarité opposée préalablement découpée, d'une des deuxièmes membranes, préalablement enduite sur un film plastique non adhésif, le film plastique étant décollé une fois l'application réalisée.

Selon une deuxième alternative de l'invention, le procédé comporte les étapes suivantes :
a'/ réalisation d'une pluralité d'électrodes négatives et d'une pluralité d'électrodes positives, et dont les porosités sont comblées par un électrolyte gélifié, comprenant chacune un substrat formé d'un feuillard métallique comprenant une bande latérale, dite rive, dépourvue de matériau actif d'insertion, et une portion centrale supportant, sur au moins une de ses faces principales, un motif de matériau actif d'insertion d'ion métal respectivement négatif ou positif;
b'/ réalisation d'une pluralité de membranes d'électrolyte sous la forme d'au moins un polymère gélifié, les dimensions surfaciques de chaque membrane étant sensiblement supérieures à celle d'un motif d'électrode ;
c'/ empilage alterné des électrodes négative et positive en intercalant à l'unité par collage des membranes d'électrolyte gélifiées, chaque membrane collée débordant des motifs des électrodes négative et positive qui l'encadrent.

Selon une variante avantageuse, l'étape b'/ est réalisée par enduction d'un électrolyte polymère gélifié sur un film en plastique non adhésif, le film plastique étant décollé une fois chaque membrane collée à une électrode négative ou positive de l'empilement.

On peut prévoir avantageusement une étape de découpe de la rive de chaque électrode pour constituer un collecteur de courant de sortie, les collecteurs de courant de sortie positifs étant superposés entre eux et distants de ceux négatifs également superposés entre eux.

L'invention a également pour objet un faisceau électrochimique d'une batterie ou accumulateur au métal-ion, tel qu'un accumulateur lithium-ion (Li-ion), présentant un potentiel électrochimique, en dehors de son emballage, le faisceau comprenant une électrode d'une polarité donnée, une pluralité de membranes à électrolyte polymère gélifié, et une pluralité à d'électrodes de polarité opposée à celle donnée, la pluralité d'électrodes de polarité opposée étant empilée en alternance avec des portions de l'électrode de polarité donnée avec les membranes intercalées à l'unité, l'une des membranes et l'électrode de polarité donnée étant enroulées sur elles-mêmes et au sein de l'empilement.

L'invention a encore pour objet un faisceau électrochimique d'une batterie ou accumulateur au métal-ion, tel qu'un accumulateur lithium-ion (Li-ion), présentant un potentiel électrochimique, en dehors de son emballage, le faisceau comprenant un empilement alterné d'une pluralité d'électrodes d'une polarité donnée, et d'une pluralité à d'électrodes de polarité opposée à celle donnée une pluralité de membranes à électrolyte polymère gélifié intercalées à l'unité entre une électrode de la polarité donnée et une électrode adjacente, de polarité opposée.

L'invention concerne enfin une batterie ou accumulateur au métal-ion, tel qu'un accumulateur lithium-ion (Li-ion), comprenant un boitier ou un emballage souple dans lequel un faisceau électrochimique tel que décrit précédemment est logé.

Dans une telle batterie ou accumulateur au métal-ion, le boitier peut comporter
- un fond auquel est soudé un des collecteurs de courant soudé au faisceau électrochimique et
- un couvercle avec une traversée formant une borne de sortie à laquelle est soudée l'autre des collecteurs de courant soudé au faisceau électrochimique.

Selon un mode de réalisation avantageux :
- le boitier est à base d'aluminium ;
- le feuillard métallique d'électrode(s) négative(s) est en cuivre ;
- le matériau actif d'insertion d'électrode(s) négative(s) est choisi dans le groupe comportant le graphite, le lithium métal, l'oxyde de titanate Li₄Ti₅O₁₂; ou à base de silicium ou à base de lithium, ou à base d'étain et de leurs alliages ;
- le feuillard métallique d'électrode(s) positive(s) est en aluminium;
- le matériau actif d'insertion d'électrode(s) positive(s) est choisi dans le groupe comportant le phosphate de fer lithié LiFePO₄, l'oxyde de cobalt lithié LiCoO₂, l'oxyde manganèse lithié, éventuellement substitué, LiMn₂O₄ ou un matériau à base de LiNixMnyCozO₂ avec x+y+z = 1, tel que LiNi_{0.33}Mn_{0.33}Co_{0.33}O₂, ou un matériau à base de LiNixCoyAlzO₂ avec x+y+z = 1, l'oxyde de nickel cobalt aluminium.

Ainsi, l'invention consiste essentiellement à définir une nouvelle manière d'intégrer des membranes à électrolyte polymère gélifié dans un faisceau électrochimique qui permet de s'affranchir des contraintes liées aux caractéristiques de telles membranes, qui les rendent inapplicables dans les procédés connus de bobinage ou pliage en Z.

Au contraire, de manière judicieuse, l'invention met à profit l'aspect collant des membranes pour garantir à la fois le bon positionnement d'électrodes négative et positive au sein du faisceau électrochimique et également figer l'empilement qui en résulte.

Avec les procédés selon l'invention, les membranes à électrolyte polymère gélifié, subissent très peu, voire aucune sollicitation mécanique, lors de la réalisation du faisceau électrochimique. Les risques de détérioration sont ainsi minimisés.

Les membranes à électrolytes polymère gélifié qui peuvent être mises en œuvre dans le cadre de l'invention présentent une limite à la rupture inférieure à la force de collage qu'elles induisent. Il peut s'agir de toutes membranes déjà existantes ou bien encore toute membrane nouvelle qui convient à une application d'accumulateur métal-ion.

En ce qui concerne les membranes existantes, elles peuvent être réalisées à partir d'un polymère choisi parmi un oxyde de polyéthylène (PEO), un polyacrylonitrile (PAN), un poly(vinylidènefluoride) (PVdF), un poly(vinylidènefluoride-hexafluoropropylène) (PVdF-HFP), d'un poly(chlorure de vinyle) (PVC), d'un poly(carbonate de vinylidène) (PVdC), d'un poly(téréphtalamide de p-phénylène) (PPTA), d'une polyvinylsulfone (PVS), d'une polyvinylpyrrolidone (PVP), d'un poly(méthacrylate de méthyle) (PMMA), dudiméthacrylate d'éthylène glycol (EGDMA) ou un mélange de ceux-ci. On pourra se référer à la publication [1] qui indique un certain nombre de polymères dont l'utilisation a été proposée pour la réalisation d'électrolytes polymères gélifiés.

Typiquement, par rapport aux dimensions courantes des électrodes d'un accumulateur métal-ion, une membrane à électrolyte polymère gélifié selon l'invention peut présenter une épaisseur comprise entre 5 à 60µm, de préférence entre 8 et 20µm.

Les faisceaux électrochimiques qui résultent des procédés selon l'invention présentent déjà un potentiel électrochimique dès la finalisation des étapes d'enroulement ou d'empilage selon l'invention, c'est-à-dire avant la mise sous emballage finaliser l'accumulateur.

Un avantage primordial qui découle de la réalisation d'un faisceau électrochimique est qu'on s'affranchit des étapes liées à l'utilisation d'un électrolyte liquide selon l'état de l'art.

Ainsi, par référence à la figure 12, grâce à l'invention les étapes usuelles respectivement de séchage de l'accumulateur, de remplissage de l'emballage au moyen d'un électrolyte liquide et de son imprégnation sont supprimées.

Par-là, l'invention permet un gain de temps de fabrication et de coûts afférents. Typiquement, pour un accumulateur Li-ion selon l'état de l'art, l'étape de séchage peut être évaluée à une durée entre 12h et 24h, le temps de remplissage par électrolyte liquide de l'ordre de quelques minutes, et le temps d'imprégnation entre 24h et 48h.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage souple ;
- la figure 4 est une vue en perspective d'un accumulateur lithium-ion selon l'état de l'art avec son emballage rigide constitué d'un boitier à géométrie cylindrique ;
- la figure 5 est une vue en coupe longitudinale d'un accumulateur lithium-ion selon l'état de l'art, montrant le faisceau électrochimique constitué d'une seule cellule électrochimique enroulée sur elle-même par bobinage selon une géométrie cylindrique à l'intérieur du boitier;
- la figure 6 est une vue en coupe transversale d'un faisceau électrochimique bobiné selon une géométrie cylindrique, destiné à être logé à l'intérieur d'un boitier comme montré en figure 5;
- la figure 7 est une vue en perspective d'un accumulateur lithium-ion selon l'état de l'art avec son emballage rigide constitué d'un boitier à géométrie prismatique ;
- la figure 8 est une vue en coupe longitudinale d'un accumulateur lithium-ion selon l'état de l'art, montrant le faisceau électrochimique constitué d'une seule cellule électrochimique enroulée sur elle-même par bobinage selon une géométrie prismatique à l'intérieur du boitier;
- la figure 9 est une vue en coupe transversale d'un faisceau électrochimique bobiné selon une géométrie prismatique, destiné à être logé à l'intérieur d'un boitier comme montré en figure 8;
- les figures 10A et 10B sont des vues respectivement de côté et de dessus d'une électrode positive du faisceau électrochimique selon l'état de l'art ;
- les figures 11A et 11B sont des vues respectivement de côté et de dessus d'une électrode négative du faisceau électrochimique selon l'état de l'art;
- la figure 12 est un synoptique à la fois des étapes du procédé de réalisation industrielle des électrodes pour accumulateurs Li-ion et des étapes du procédé d'assemblage de tels accumulateurs, telles qu'elles existent actuellement.
- les figures 13 et 14 sont des vues en coupe transversale d'un faisceau électrochimique selon l'état de l'art réalisé par empilage selon une technique de pliage en Z;
- la figure 15 est une vue de face d'une électrode négative d'un accumulateur Li-ion sur laquelle a été déposée par enduction une membrane à électrolyte polymère gélifié conformément à l'invention ;
- la figure 16 une vue de face d'une électrode positive d'un accumulateur Li-ion sur laquelle a été déposée par enduction une membrane à électrolyte polymère gélifié conformément à l'invention ;
- les figures 17A à 17G sont des vues schématiques en coupe transversales montrant les différentes étapes de réalisation d'un faisceau électrochimique selon un exemple de procédé selon l'invention ;
- la figure 18 est une vue en coupe transversale montrant un faisceau électrochimique d'accumulateur Li-ion gélifié obtenu selon le procédé des figures 17A à 17G.

Par souci de clarté, les mêmes références désignant les mêmes éléments d'un accumulateur au lithium-ion selon l'état de l'art et selon l'invention sont utilisées pour toutes les figures 1 à 18.

On précise que les différents éléments selon l'invention sont représentés uniquement par souci de clarté et qu'ils ne sont pas à l'échelle.

On précise également que le terme de « longueur » et « latéral » se rapportant à une électrode est à considérer lorsqu'elle est à plat avant son bobinage.

Les termes de «hauteur » et « latéral » se rapportant au faisceau électrochimique est à considérer en configuration à la verticale avec ses extrémités latérales respectivement sur le haut et sur le bas.

Les figures 1 à 14 ont déjà été commentées en détail en préambule. Elles ne sont donc pas décrites ci-après.

Comme détaillé en préambule, les inventeurs ont pu constater qu'il n'était pas techniquement envisageable d'appliquer les procédés de réalisation usuels de faisceau d'accumulateur Li-ion, que ce soit par bobinage (spiralage) ou par empilage, avec une membrane à électrolyte polymère gélifié en lieu et place d'un séparateur.

Cette impossibilité technique est due aux caractéristiques d'une telle membrane, qui est fragile, collante et sa tenue mécanique est limitée.

Aussi, les inventeurs proposent un nouveau procédé de réalisation d'un faisceau électrochimique qui met en œuvre une membrane à électrolyte polymère gélifié. Dans l'exemple illustré, on peut mettre en œuvre par exemple une membrane en PvdF-Hfp ou encore toute nouvelle membrane dont l'électrolyte polymère est gélifié au préalable ou lors de sa mise en forme et qui convient à l'application Li-ion.

Les différentes étapes du procédé sont les suivantes.

On précise au préalable que tous les feuillards métalliques de section carrée ou rectangulaire supportant les matériaux actif d'insertion d'électrodes peuvent avoir une épaisseur comprise entre 5 et 50 µm. Pour un feuillard d'anode 3, il peut s'agir avantageusement d'un feuillard en cuivre d'épaisseur de l'ordre de 10 µm. Pour un feuillard de cathode 2, il peut s'agir avantageusement d'un feuillard en aluminium d'épaisseur de l'ordre de 15 µm.

Une électrode positive 2 ou négative 3 selon l'invention, comprend comme usuellement une bande latérale métallique ou rive 20 ou 30 dépourvue de matériau actif d'insertion. Les électrodes positive et négative sont donc réalisées comme montré aux figures 10A à 11B. De préférence, les couches 2I, 3I de matière active d'insertion intègrent un électrolyte sous forme de polymère gélifié.

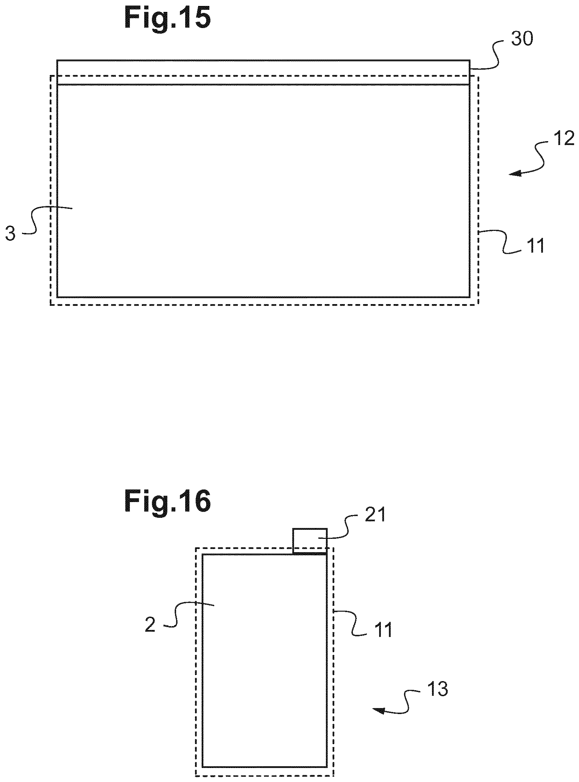

Sur une électrode négative 3 de grandes dimensions, on vient déposer par enduction une membrane à électrolyte polymère gélifié 11. L'enduction est réalisée de telle manière que la membrane 11 déborde de 0.5 à 2 mm, de préférence de 1mm des bords de la couche de matière active de l'électrode 3, comme montré en figure 15. Le fait que la membrane 11 déborde légèrement permet d'éviter tout risque de court-circuit lors du fonctionnement de l'accumulateur.

Une fois l'enduction réalisée, l'électrode négative 3 et la membrane 11 forment un support 12, comme montré également en figure 15. Du fait de la grande longueur souhaitée du support 12 et afin d'éviter tout collage non désiré, on peut déposer sur la membrane 11 un film plastique non adhésif, par exemple en poly(téréphtalate d'éthylène) (PET). Puis, on enroule sur lui-même le support 12 protégé par le film à des fins de stockage.

On réalise une pluralité d'électrodes positives 2 de la manière suivante. On enduit un film plastique non adhésif, par exemple en PET, d'un polymère à électrolyte gélifié. La membrane 11 ainsi formée et supportée par le film plastique est ensuite découpée à des dimensions de 0,5 à 2mm, de préférence 1mm, supérieures à celles de la couche de matière active d'une électrode positive 2.

Puis, la membrane découpée 11 est collée sur l'électrode positive 2 de telle manière que la membrane 11 déborde légèrement de la couche active de l'électrode positive 2 tout en laissant émerger la partie 21 de rive qui forme un collecteur de courant de sortie. Une fois, le collage effectué, on enlève le film plastique : le sous-ensemble formé 13 est montré schématiquement en figure 16.

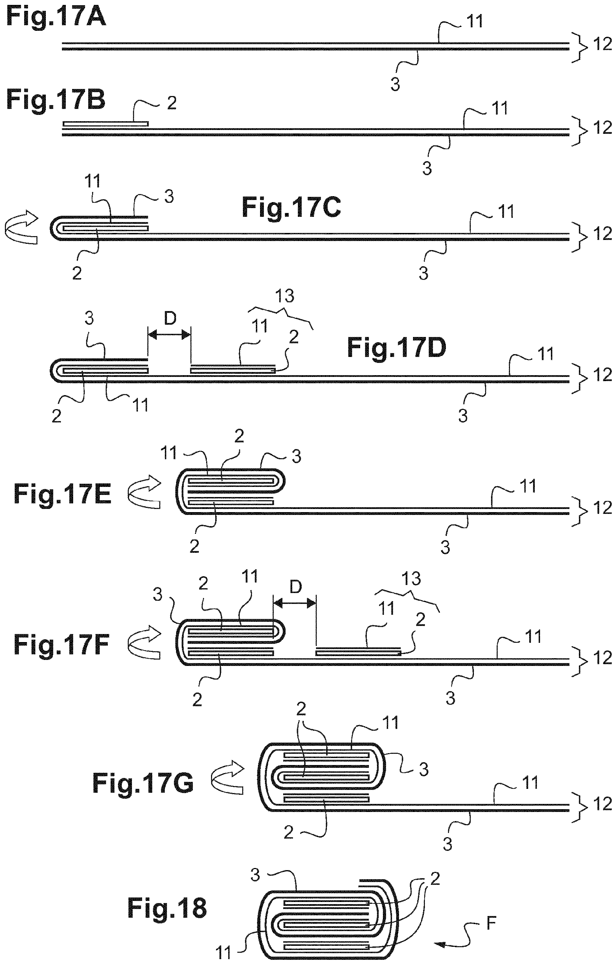

Une fois, le support 12 et les sous-ensembles 13 préparés, on vient mettre à plat le support 12 en enlevant le cas échéant le film plastique déposé sur la membrane 11 (figure 17A).

Une électrode positive 2 dénuée de membrane, est alors déposée par un de ses faces principales sur la membrane 11 sur l'un des bords latéraux du support 12 (figure 17B). L'électrode positive 2 est alors collée par la membrane 11 qui assure en outre son positionnement fixe.

Puis, on vient enrouler le support 12 sur lui-même, de telle manière que l'autre face principale de la première électrode positive 2 est recouverte et collée par la membrane 11 du support 12 (figure 17C).

On dépose alors, à une distance déterminée D, du bord replié du support 12, un premier sous-ensemble 13 de telle manière que l'électrode positive 2 de ce premier sous-ensemble 13 vienne se coller sur la membrane 11 du support 12 tandis que la membrane 11 du premier sous-ensemble 13 fait face vers le haut (figure 17D).

La distance D est déterminée pour pouvoir enrouler à nouveau le support 12 sur lui-même avec une superposition des deux électrodes positives 2 et un intercalage de la membrane 11 du premier sous-ensemble 13 entre la portion d'électrode négative repliée 3 et l'électrode positive 2 du premier sous-ensemble 13 (figure 17E). La distance D, dépendante de l'épaisseur du sous ensemble 13 mais aussi du nombre de tours d'enroulement déjà réalisés, est également déterminée de sorte à ce que la portion du support 12 qui est repliée sur le bord latéral de l'empilement formé vienne épouser ce dernier.

On réitère les opérations précédentes avec un dépôt du deuxième sous-ensemble 13 qui est alors collé sur la membrane 11 du support 12 à la distance D (figure 17F) puis un enroulement du support 12 sur lui-même pour venir superposer l'électrode positive 2 du deuxième sous-ensemble 13 sur l'empilement (figure 17G).

Les opérations de dépôt de sous-ensembles 13 sur la membrane 11 du support 12 sont réitérées d'autant de fois qu'il y a de sous-ensembles à agencer dans le faisceau électrochimique et ce en fonction des caractéristiques de l'accumulateur que l'on souhaite obtenir.

Au final, le faisceau électrochimique obtenu F, tel que montré en figure 18, présente un potentiel électrochimique quand bien même il n'est pas encore logé dans un emballage souple ou boitier rigide de l'accumulateur.

Pour finaliser la réalisation définitive d'un accumulateur selon l'invention, on procède comme usuellement à la différence substantielle qu'il n'est plus nécessaire d'effectuer des étapes de remplissage par un électrolyte liquide ni les étapes préalable de séchage du faisceau électrochimique et d'attente par la suite de son imprégnation avant de réaliser l'étape de cyclage et de tests afférents.

Ainsi, pour finaliser la réalisation d'un accumulateur à boitier rigide, on procède comme suit.

On soude à l'une des extrémités latérales du faisceau F à membranes électrolytes polymères gélifiés comme montré en figure 18, un collecteur de courant usuel sous la forme d'un disque plein, lui-même destiné à être soudé par la suite avec le fond 8 du boitier 6 d'accumulateur de forme cylindrique ou prismatique.

On procède de la même manière à l'autre des extrémités latérales du faisceau, avec une partie de collecteur de courant usuel sous la forme d'un disque plein percé en son centre et d'une languette faisant saillie latéralement du disque.

On introduit alors le faisceau F avec les collecteurs dans un récipient rigide en aluminium formant uniquement l'enveloppe latérale du boitier 6. On veille en particulier lors de cette étape à ce que la languette ne gêne pas l'introduction. Pour ce faire, on replie celle-ci avantageusement vers le haut.

On soude le collecteur avec le fond 8 du boitier 6.

On soude le collecteur à un pôle négatif 50 formant une traversée d'un couvercle 9 de boitier 6.

On soude alors le couvercle 9 au récipient rigide métallique 7.

L'accumulateur Li-ion est alors finalisé, les étapes de cyclage électrique peuvent être réalisées.

Dans l'exemple illustré, l'électrode de plus grandes dimensions qui constitue avec la membrane à électrolyte polymère gélifié, le support à enrouler, est une électrode négative. On peut bien entendu réaliser tout autre faisceau électrochimique à partir d'une électrode positive à fonction de support à enrouler, les électrodes intégrées dans les sous-ensembles rapportés sur le support étant alors des électrodes négatives.

La membrane utilisée dans les exemples précédents a ainsi été réalisée par une technique d'enduction mais elle peut aussi être élaborée par d'autres moyens déjà appréhendés (impression, spray, extrusion, laminage).

Par ailleurs, le procédé peut être transposé sans difficulté par l'homme de l'art à une cellule comprenant une électrode négative en lithium métal pour constituer un accumulateur lithium.

### Référence citée

[1] : M. Alamgir et K. M. Abraham, Lithium batteries: « New materials, Developments and Perspectives », chapitre 3, édité par G. Pistoia, Elsevier 199410

## Revendications

1. Procédé de réalisation d'un faisceau électrochimique (F) d'un accumulateur (A) métal-ion tel qu'un accumulateur Li-ion, comprenant les étapes suivantes :
a1/ réalisation d'une électrode de polarité donnée et dont les porosités sont comblées par un électrolyte gélifié, comprenant un substrat (3S) formé d'un feuillard métallique comprenant une bande latérale, dite rive (30), dépourvue de matériau actif d'insertion, et une portion centrale (32) supportant, sur au moins une de ses faces principales, un motif de matériau actif d'insertion d'ion métal de la polarité donnée;
a2/ réalisation d'une pluralité d'électrodes d'une polarité opposée à celle donnée et dont les porosités sont comblées par l'électrolyte gélifié, comprenant chacune un substrat (2S) formé d'un feuillard métallique comprenant une bande latérale, dite rive (20), dépourvue de matériau actif d'insertion, et une portion centrale (22) supportant, sur au moins une de ses faces principales, un motif de matériau actif d'insertion d'ion métal de la polarité opposée;
b1/ réalisation d'une première membrane (11) d'électrolyte sous la forme d'au moins un polymère gélifié, les dimensions surfaciques de la première membrane étant sensiblement supérieures à celle du motif de l'électrode de la polarité donnée ;
b2/ réalisation d'une pluralité de deuxièmes membranes (11) d'électrolyte sous la forme d'au moins un polymère gélifié, les dimensions surfaciques de chaque deuxième membrane étant sensiblement supérieures à celles des motifs d'électrodes de la polarité opposée;
c1/ dépôt de la première membrane d'électrolyte gélifiée sur une des faces principales de l'électrode de polarité donnée (2) de sorte à former un support (12), le dépôt étant tel que la première membrane déborde du motif de l'électrode de polarité donnée ;
c2/ dépôt de chaque deuxième membrane d'électrolyte gélifiée sur une faces principales des électrodes de polarité opposée de sorte à former un sous-ensemble (13), le dépôt étant tel que la deuxième membrane déborde du motif de l'électrode de polarité opposée ;
d/ mise à plat du support (12) constitué de l'électrode de polarité donnée sur laquelle est collée la première membrane;
e/ collage d'une des faces principales d'une électrode de polarité opposée sur la première membrane dénuée de l'électrode de polarité donnée, le collage étant réalisé au niveau d'un des bords latéraux du support;
f/ bobinage sur lui-même du support de sorte à venir coller également l'autre des faces principales de l'électrode de polarité donnée sur la première membrane ;
g/ collage de l'électrode d'un sous-ensemble (13) sur la première membrane, le collage étant réalisé à distance de la portion du support bobinée selon l'étape f/;
h/ bobinage sur lui-même du support (12) de sorte à venir coller l'électrode du support sur la deuxième membrane du sous-ensemble (13) tout en superposant les deux électrodes de polarité opposée ;
i/ réitération des étapes g/ et h/ avec tous les sous-ensembles de sorte à obtenir le faisceau bobiné.

2. Procédé selon la revendication 1, l'électrode de polarité donnée formant le support avec la première membrane étant une anode.

3. Procédé selon la revendication 1 ou 2, l'étape c1/ étant réalisée par enduction d'un électrolyte polymère gélifié sur la face principale d'électrode de polarité donnée.

4. Procédé selon la revendication 3, un film en plastique non adhésif étant appliqué contre la première membrane, le support étant alors enroulé sur lui-même avant l'étape d/, le film plastique étant décollé après l'étape d/ et avant l'étape e/.

5. Procédé selon l'une des revendications précédentes, l'étape c2/ étant réalisée par application, sur chacune des électrodes de polarité opposée préalablement découpée, d'une des deuxièmes membranes, préalablement enduite sur un film plastique non adhésif, le film plastique étant décollé une fois l'application réalisée.

6. Procédé de réalisation d'un faisceau électrochimique (F) d'un accumulateur (A) métal-ion tel qu'un accumulateur Li-ion, comprenant les étapes suivantes :
a'/ réalisation d'une pluralité d'électrodes négatives et d'une pluralité d'électrodes positives, et dont les porosités sont comblées par un électrolyte gélifié, comprenant chacune un substrat (2S, 3S) formé d'un feuillard métallique comprenant une bande latérale, dite rive (20, 30), dépourvue de matériau actif d'insertion, et une portion centrale (22, 32) supportant, sur au moins une de ses faces principales, un motif de matériau actif d'insertion d'ion métal respectivement négatif ou positif;
b'/ réalisation d'une pluralité de membranes d'électrolyte sous la forme d'au moins un polymère gélifié, les dimensions surfaciques de chaque membrane étant sensiblement supérieures à celle d'un motif d'électrode ;
c'/ empilage alterné des électrodes négative et positive en intercalant à l'unité par collage des membranes d'électrolyte gélifiées, chaque membrane collée débordant des motifs des électrodes négative et positive qui l'encadrent.

7. Procédé selon la revendication 6, l'étape b'/ étant réalisée par enduction d'un électrolyte polymère gélifié sur un film en plastique non adhésif, le film plastique étant décollé une fois chaque membrane collée à une électrode négative ou positive de l'empilement.

8. Procédé selon l'une des revendications précédentes, comprenant une étape de découpe de la rive de chaque électrode pour constituer un collecteur de courant de sortie, les collecteurs de courant de sortie positifs étant superposés entre eux et distants de ceux négatifs également superposés entre eux.

9. Faisceau électrochimique d'une batterie ou accumulateur au métal-ion, tel qu'un accumulateur lithium-ion (Li-ion), présentant un potentiel électrochimique, en dehors de son emballage, le faisceau comprenant une électrode d'une polarité donnée, une pluralité de membranes à électrolyte polymère gélifié, et une pluralité à d'électrodes de polarité opposée à celle donnée, la pluralité d'électrodes de polarité opposée étant empilée en alternance avec des portions de l'électrode de polarité donnée avec les membranes intercalées à l'unité, l'une des membranes et l'électrode de polarité donnée étant enroulées sur elles-mêmes et au sein de l'empilement.

10. Faisceau électrochimique d'une batterie ou accumulateur au métal-ion, tel qu'un accumulateur lithium-ion (Li-ion), présentant un potentiel électrochimique, en dehors de son emballage, le faisceau comprenant un empilement alterné d'une pluralité d'électrodes d'une polarité donnée, et d'une pluralité à d'électrodes de polarité opposée à celle donnée une pluralité de membranes à électrolyte polymère gélifié intercalées à l'unité entre une électrode de la polarité donnée et une électrode adjacente, de polarité opposée.

11. Batterie ou accumulateur au métal-ion, tel qu'un accumulateur lithium-ion (Li-ion), comprenant un boitier (6) ou un emballage souple dans lequel un faisceau électrochimique selon la revendication 9 ou 10 est logé.

12. Batterie ou accumulateur au métal-ion selon la revendication 11, le boitier (6) comportant :
- un fond (8) auquel est soudé un des collecteurs de courant soudé au faisceau électrochimique et
- un couvercle (9) avec une traversée formant une borne de sortie à laquelle est soudée l'autre des collecteurs de courant soudé au faisceau électrochimique.

13. Batterie ou accumulateur Li-ion selon la revendication 12, dans laquelle :
- le boitier est à base d'aluminium ;
- le feuillard métallique d'électrode(s) négative(s) est en cuivre ;
- le matériau actif d'insertion d'électrode(s) négative(s) est choisi dans le groupe comportant le graphite, le lithium métal, l'oxyde de titanate Li₄Ti₅O₁₂ ; ou à base de silicium ou à base de lithium, ou à base d'étain et de leurs alliages ;
- le feuillard métallique d'électrode(s) positive(s) est en aluminium;
- le matériau actif d'insertion d'électrode(s) positive(s) est choisi dans le groupe comportant le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, tel que l'oxyde de nickel cobalt Aluminium LiNi_{0.8}Co_{0.15}Al_{0.05}O₂.

## Patentansprüche

1. Verfahren zur Herstellung eines elektrochemischen Bündels (F) eines Metall-Ionen-Akkumulators (A) wie eines Li-Ionen-Akkumulators, umfassend die folgenden Schritte:
a1/ Herstellen einer Elektrode mit gegebener Polarität, deren Porositäten mit einem gelierten Elektrolyten ausgefüllt sind, umfassend ein Substrat (3S), das aus einem Metallband gebildet ist, das einen Seitenstreifen, Rand (30) genannt, ohne aktives Einlagerungsmaterial, und einen zentralen Abschnitt (32), der auf mindestens einer seiner Hauptseiten ein Muster aus aktivem Metallioneneinlagerungsmaterial mit der gegebenen Polarität trägt, umfasst;
a2/ Herstellen einer Mehrzahl von Elektroden mit einer zu der gegebenen entgegengesetzten Polarität, deren Porositäten mit einem gelierten Elektrolyten ausgefüllt sind, umfassend jeweils ein Substrat (2S), das aus einem Metallband gebildet ist, das einen Seitenstreifen, Rand (20) genannt, ohne aktives Einlagerungsmaterial, und einen zentralen Abschnitt (22), der auf mindestens einer seiner Hauptseiten ein Muster aus aktivem Metallioneneinlagerungsmaterial mit der entgegengesetzten Polarität trägt, umfasst;
b1/ Herstellen einer ersten Elektrolytmembran (11) in Form mindestens eines gelierten Polymers, wobei die Oberflächenabmessungen der ersten Membran wesentlich größer als die des Musters der Elektrode mit der gegebenen Polarität sind;
b2/ Herstellen einer Mehrzahl von zweiten Elektrolytmembranen (11) in Form mindestens eines gelierten Polymers, wobei die Oberflächenabmessungen jeder zweiten Membran wesentlich größer als die der Muster von Elektroden mit der entgegengesetzten Polarität sind;
c1/ Auftragen der ersten gelierten Elektrolytmembran auf eine der Hauptseiten der Elektrode mit gegebener Polarität (2), so dass ein Träger (12) gebildet wird, wobei der Auftrag derart ist, dass die erste Membran über das Muster der Elektrode mit gegebener Polarität übersteht;
c2/ Auftragen jeder zweiten gelierten Elektrolytmembran auf eine Hauptseiten der Elektroden mit entgegengesetzter Polarität, so dass eine Untergruppe (13) gebildet wird, wobei der Auftrag derart ist, dass die zweite Membran über das Muster der Elektrode mit entgegengesetzter Polarität übersteht;
d/ Flachlegen des Trägers (12), der aus der Elektrode mit gegebener Polarität besteht, auf welche die erste Membran geklebt ist;
e/ Kleben einer der Hauptseiten einer Elektrode mit entgegengesetzter Polarität auf die erste Membran ohne die Elektrode mit gegebener Polarität, wobei das Kleben an einem der Seitenränder des Trägers erfolgt;
f/ Aufrollen des Trägers, so dass auch die andere der Hauptseiten der Elektrode mit gegebener Polarität auf die erste Membran geklebt wird;
g/ Kleben der Elektrode einer Untergruppe (13) auf die erste Membran, wobei das Kleben im Abstand von dem im Schritt f/ aufgerollten Abschnitt des Trägers erfolgt;
h/ Aufrollen des Trägers (12), so dass die Elektrode des Trägers auf die zweite Membran der Untergruppe (13) geklebt wird und dabei die beiden Elektroden mit entgegengesetzter Polarität überlagert werden;
i/ Wiederholen der Schritte g/ und h/ mit allen Untergruppen, so dass das aufgerollte Bündel erhalten wird.

2. Verfahren nach Anspruch 1, wobei die den Träger mit der ersten Membran bildende Elektrode mit gegebener Polarität eine Anode ist.

3. Verfahren nach Anspruch 1 oder 2, wobei der Schritt c1/ durch Streichen eines gelierten Polymerelektrolyten auf die Hauptseite der Elektrode mit gegebener Polarität erfolgt.

4. Verfahren nach Anspruch 3, wobei ein nicht haftender Film aus Kunststoff gegen die erste Membran appliziert wird, wobei der Träger dann vor Schritt d/ aufgewickelt wird, wobei der Kunststofffilm nach Schritt d/ und vor Schritt e/ abgelöst wird.

5. Verfahren nach einem der vorhergehenden Ansprüche, wobei der Schritt c2/ durch Applizieren, auf jede der zuvor geschnittenen Elektroden mit entgegengesetzter Polarität, einer der zweiten Membranen ausgeführt wird, die zuvor auf einen nicht haftenden Kunststofffilm gestrichen wurde, wobei der Kunststofffilm nach erfolgtem Applizieren abgelöst wird.

6. Verfahren zur Herstellung eines elektrochemischen Bündels (F) eines Metall-Ionen-Akkumulators (A) wie eines Li-Ionen-Akkumulators, umfassend die folgenden Schritte:
a'/ Herstellen einer Mehrzahl von negativen Elektroden und einer Mehrzahl von positiven Elektroden, deren Porositäten mit einem gelierten Elektrolyten ausgefüllt sind, umfassend jeweils ein Substrat (2S, 3S), das aus einem Metallband gebildet ist, das einen Seitenstreifen, Rand (20, 30) genannt, ohne aktives Einlagerungsmaterial, und einen zentralen Abschnitt (22, 32), der auf mindestens einer seiner Hauptseiten ein Muster aus negativem oder positivem aktivem Metallioneneinlagerungsmaterial trägt, umfasst;
b'/ Herstellen einer Mehrzahl von Elektrolytmembranen in Form mindestens eines gelierten Polymers, wobei die Oberflächenabmessungen jeder Membran wesentlich größer als die eines Elektrodenmusters sind;
c'/ abwechselndes Schichten der negativen und positiven Elektroden, wobei gelierte Elektrolytmembranen stückweise durch Kleben interkaliert werden, wobei jede geklebte Membran über die Muster der sie einrahmenden negativen und positiven Elektroden übersteht.

7. Verfahren nach Anspruch 6, wobei Schritt b'/ durch Streichen eines gelierten Polymerelektrolyten auf einen nicht haftenden Film aus Kunststoff erfolgt, wobei der Kunststofffilm abgelöst wird, sobald jede Membran an eine negative oder positive Elektrode des Schichtsystems geklebt ist.

8. Verfahren nach einem der vorhergehenden Ansprüche, umfassend einen Schritt des Schneidens des Rands jeder Elektrode, um einen Ausgangsstromkollektor zu bilden, wobei die positiven Ausgangsstromkollektoren untereinander überlagert sind und von den negativen, die einander ebenfalls überlagert sind, beabstandet sind.

9. Elektrochemisches Bündel eines Metall-Ionen-Akkumulators oder einer Metall-Ionen-Batterie wie eines Lithium-Ionen-(Li-Ion-)Akkumulators, aufweisend ein elektrochemisches Potenzial, außerhalb seiner Verpackung, wobei das Bündel eine Elektrode mit einer gegebenen Polarität, eine Mehrzahl von Membranen mit geliertem Polymerelektrolyten und eine Mehrzahl von Elektroden mit zu der gegebenen entgegengesetzten Polarität umfasst, wobei die Mehrzahl von Elektroden mit entgegengesetzter Polarität im Wechsel mit Abschnitten der Elektroden mit gegebener Polarität mit stückweise interkalierten Membranen geschichtet wird, wobei eine der Membranen und die Elektrode umeinander und in dem Schichtsystem gewickelt sind.

10. Elektrochemisches Bündel eines Metall-Ionen-Akkumulators oder einer Metall-Ionen-Batterie wie eines Lithium-Ionen-(Li-Ion-)Akkumulators, aufweisend ein elektrochemisches Potenzial, außerhalb seiner Verpackung, wobei das Bündel ein abwechselndes Schichtsystem aus einer Mehrzahl von Elektroden mit einer gegebenen Polarität und einer Mehrzahl von Elektroden mit zur gegebenen entgegengesetzten Polarität eine Mehrzahl von Membranen mit geliertem Polymerelektrolyten, die stückweise zwischen einer Elektrode mit der gegebenen Polarität und einer benachbarten Elektrode mit entgegengesetzter Polarität interkaliert ist, umfasst.

11. Metall-Ionen-Batterie oder -Akkumulator wie ein Lithium-Ionen-(Li-Ion-)Akkumulator, umfassend ein Gehäuse (6) oder eine flexible Verpackung, in der ein elektrochemisches Bündel nach Anspruch 9 oder 10 aufgenommen ist.

12. Metall-Ionen-Batterie oder -Akkumulator nach Anspruch 11, wobei das Gehäuse (6) beinhaltet:
- einen Boden (8), an den einer der Stromkollektoren geschweißt ist, der an das elektrochemische Bündel geschweißt ist, und
- einen Deckel (9) mit einer eine Ausgangsklemme bildenden Durchführung, an die der andere der Stromkollektoren geschweißt ist, der an das elektrochemische Bündel geschweißt ist.

13. Li-Ionen-Batterie oder -Akkumulator nach Anspruch 12, in der bzw. dem:
- das Gehäuse auf Aluminiumbasis ist;
- das Metallband von (einer) negativen Elektrode(n) aus Kupfer ist;
- das aktive Einlagerungsmaterial von (einer) negativen Elektrode(n) aus der Gruppe gewählt ist, die Graphit, metallisches Lithium, Titanatoxid Li₄Ti₅O₁₂ umfasst, oder auf Siliciumbasis oder Lithiumbasis oder auf Zinnbasis und ihren Legierungen ist;
- das Metallband von (einer) positiven Elektrode(n) aus Aluminium ist;
- das aktive Einlagerungsmetall von (einer) positiven Elektrode(n) aus der Gruppe gewählt ist, die Lithium-Eisenphosphat LiFePO₄, Lithium-Cobalt-Oxid LiCoO₂, Lithium-Manganoxid, gegebenenfalls substituiert, LiMn₂O₄ oder ein Material auf Basis von LiNiₓMn_{y}Co_{z}O₂ mit x+y+z = 1 wie LiNi_{0.33}Mn_{0.33}Co_{0.33}O₂ oder ein Material auf Basis von LiNiₓCo_{y}Al_{z}O₂ mit x+y+z = 1 wie Nickel-Cobalt-AluminiumOxid LiNi_{0.8}Co_{0.15}Al_{0.05}O₂ umfasst.

## Claims

1. Method for producing an electrochemical assembly (F) of a metal-ion accumulator (A) such as an Li-ion accumulator, comprising the following steps:
a1/ producing an electrode of given polarity and the porosities of which are filled with a gelled electrolyte, comprising a substrate (3S) formed from a metal foil comprising a lateral strip, referred to as a border (30), lacking active insertion material, and a central portion (32) bearing, on at least one of its main faces, a pattern of material for active insertion of metal ions of the given polarity;
a2/ producing a plurality of electrodes of a polarity opposite to the given polarity and the porosities of which are filled with the gelled electrolyte, each comprising a substrate (2S) formed from a metal foil comprising a lateral strip, referred to as a border (20), lacking active insertion material, and a central portion (22) bearing, on at least one of its main faces, a pattern of material for active insertion of metal ions of the opposite polarity;
b1/ producing a first electrolyte membrane (11) in the form of at least one gelled polymer, the surface dimensions of the first membrane being substantially greater than those of the pattern of the electrode of the given polarity;
b2/ producing a plurality of second electrolyte membranes (11) in the form of at least one gelled polymer, the surface dimensions of each second membrane being substantially greater than those of the patterns of electrodes of the opposite polarity;
c1/ depositing the first gelled electrolyte membrane on one of the main faces of the electrode of given polarity (2) so as to form a support (12), the deposition being such that the first membrane overlaps the pattern of the electrode of given polarity;
c2/ depositing each second gelled electrolyte membrane on one main faces of the electrodes of opposite polarity so as to form a subassembly (13), the deposition being such that the second membrane overlaps the pattern of the electrode of opposite polarity;
d/ flattening the support (12) composed of the electrode of given polarity to which the first membrane is bonded;
e/ bonding one of the main faces of an electrode of opposite polarity to the first membrane without the electrode of given polarity, the bonding being carried out at one of the lateral edges of the support;
f/ winding the support on itself so as also to bond the other of the main faces of the electrode of given polarity to the first membrane;
g/ bonding the electrode of a subassembly (13) to the first membrane, the bonding being carried out at a distance from the portion of the support wound in step f/;
h/ winding the support (12) on itself so as to bond the electrode of the support to the second membrane of the subassembly (13) while at the same time superposing the two electrodes of opposite polarity;
i/ reiterating steps g/ and h/ with all the subassemblies so as to obtain the wound assembly.

2. Method according to Claim 1, the electrode of given polarity forming the support with the first membrane being an anode.

3. Method according to Claim 1 or 2, step c1/ being carried out by coating a gelled polymer electrolyte on the main face of the electrode of given polarity.

4. Method according to Claim 3, a film of non-adhesive plastic being applied to the first membrane, the support then being wound on itself before step d/, the plastic film being detached after step d/ and before step e/.

5. Method according to one of the preceding claims, step c2/ being carried out by applying, to each of the electrodes of opposite polarity which has been previously cut out, one of the second membranes, previously coated on a non-adhesive plastic film, the plastic film being detached once the application has been carried out.

6. Method for producing an electrochemical assembly (F) of a metal-ion accumulator (A) such as an Li-ion accumulator, comprising the following steps:
a'/ producing a plurality of negative electrodes and a plurality of positive electrodes, the porosities of which are filled with a gelled electrolyte, each comprising a substrate (2S, 3S) formed from a metal foil comprising a lateral strip, referred to as a border (20, 30), lacking active insertion material, and a central portion (22, 32) bearing, on at least one of its main faces, a pattern of material for active insertion of respectively negative or positive metal ions;
b'/ producing a plurality of electrolyte membranes in the form of at least one gelled polymer, the surface dimensions of each membrane being substantially greater than those of an electrode pattern;
c'/ alternately stacking the negative and positive electrodes by intercalating gelled electrolyte membranes one by one by bonding, each bonded membrane overlapping the patterns of the negative electrode and positive electrode which flank it.

7. Method according to Claim 6, step b'/ being carried out by coating a gelled polymer electrolyte on a film of non-adhesive plastic, the plastic film being detached once each membrane has been bonded to a negative or positive electrode of the stack.

8. Method according to one of the preceding claims, comprising a step of cutting out the border of each electrode to form an output current collector, the positive output current collectors being superposed on one other and at a distance from the negative output current collectors, which are also superposed on one other.

9. Electrochemical assembly of a metal-ion battery or accumulator, such as a lithium-ion (Li-ion) accumulator, having an electrochemical potential, outside its packaging, the assembly comprising an electrode of a given polarity, a plurality of gelled polymer electrolyte membranes, and a plurality of electrodes of polarity opposite to the given polarity, the plurality of electrodes of opposite polarity being stacked alternately with portions of the electrode of given polarity with the membranes intercalated one by one, one of the membranes and the electrode of given polarity being wound on themselves and within the stack.

10. Electrochemical assembly of a metal-ion battery or accumulator, such as a lithium-ion (Li-ion) accumulator, having an electrochemical potential, outside its packaging, the assembly comprising an alternating stack of a plurality of electrodes of a given polarity, and of a plurality of electrodes of polarity opposite to the given polarity a plurality of gelled polymer electrolyte membranes intercalated one by one between an electrode of the given polarity and an adjacent electrode, of opposite polarity.

11. Metal-ion battery or accumulator, such as a lithium-ion (Li-ion) accumulator, comprising a flexible packaging or housing (6) in which an electrochemical assembly according to Claim 9 or 10 is housed.

12. Metal-ion battery or accumulator according to Claim 11, the housing (6) comprising:
- a bottom (8) to which one of the current collectors welded to the electrochemical assembly is welded and
- a lid (9) with a feedthrough forming an output terminal to which the other of the current collectors welded to the electrochemical assembly is welded.

13. Li-ion battery or accumulator according to Claim 12, wherein:
- the housing is based on aluminium;
- the metal foil of negative electrode(s) is made of copper;
- the active insertion material for negative electrode(s) is chosen from the group comprising graphite, lithium metal, titanate oxide Li₄Ti₅O₁₂ or is based on silicon or based on lithium, or based on tin and on their alloys;
- the metal foil of positive electrode(s) is made of aluminium;
- the active insertion material for positive electrode(s) is chosen from the group comprising lithium iron phosphate LiFePO₄, lithium cobalt oxide LiCoCO₂, lithium manganese oxide LiMn₂O₄, optionally substituted, or a material based on LiNiₓMn_{y}Co_{z}O₂ with x+y+z = 1, such as LiNi_{0.33}Mn_{0.33}Co_{0.33}O₂, or a material based on LiNiₓCo_{y}Al_{z}O₂ with x+y+z = 1, such as nickel cobalt aluminium oxide LiNi_{0.8}Co_{0.15}Al_{0.05}O₂.
